# EUROPÄISCHE PATENTSCHRIFT

(11) **EP 1 425 204 B1**
(45) Veröffentlichungstag und Bekanntmachung des Hinweises auf die Patenterteilung: **19.03.2008**
(21) Anmeldenummer: 02767103.1
(22) Anmeldetag: 16.08.2002
(51) Int. Cl.: B60S 1/32, B60S 1/38

(54) **WISCHARM MIT EINEM GELENKIG VERBUNDENEN WISCHBLATT**
WIPER ARM COMPRISING A WIPER BLADE WHICH IS CONNECTED TO THE SAME IN AN ARTICULATED MANNER
BRAS D'ESSUIE-GLACE DOTE D'UN BALAI RACCORDE AU BRAS DE MANIERE ARTICULEE

(30) Priorität: 01.09.2001 DE 10142997
(43) Veröffentlichungstag der Anmeldung: 09.06.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2002/002996
(87) Internationale Veröffentlichungsnummer: WO 2003/026938

(56) Entgegenhaltungen:
- DE-A- 4 436 604
- DE-A- 19 647 347
- DE-A- 19 731 683

## Beschreibung

### Stand der Technik

Die Erfindung geht von einem Wischarm mit einem gelenkig verbundenen Wischblatt nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Mit dem Wischarm ist ein Wischblatt gelenkig verbunden, das aus einem Tragbügelsystem mit einem Mittelbügel und gegebenenfalls mit untergeordneten Bügeln aufgebaut ist, z.B. einem Zwischenbügel und/oder Krallenbügeln, die eine Wischleiste halten. Die Bügel sind mit den untergeordneten Bügeln ebenfalls gelenkig verbunden, so dass sich die Wischleiste während der Schwenkbewegung einer Wölbung der Fahrzeugscheibe anpassen kann. Solche Scheibenwischer sind z.B. aus der DE 37 44 237 A1 bekannt. Die Gelenke zwischen den Bügeln werden in der Regel durch Kunststoffteile gebildet, die gleichzeitig die Stirnseite des Profils des übergeordneten Bügels abdecken.

Aus der DE 197 38 232 A1 ist ferner ein Tragelement aus einem elastischen, hochfesten Kunststoff für eine Wischleiste bekannt, das im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. An den Stirnseiten werden als Abschluss des Profils Kappen aus Kunststoff montiert. Es sind ferner ähnliche Wischblätter mit einem Tragelement aus Federstahl bekannt. Im Folgenden wird unter Wischleistenträger sowohl ein Tragbügelsystem als auch ein Tragelement im oben beschriebenen Sinn verstanden.

Wischblätter neigen während des Wischvorgangs häufig zum Schwingen. Vor allem bei relativ langen Wischblättern ist die Führung am Gelenk zwischen dem Wischblatt und dem Wischarm nicht ausreichend stabil, um diese Schwingungen zu unterbinden. Da ein Wischblatt ein schlankes Bauteil ist, und auf Grund großer Geschwindigkeitsunterschiede zwischen dem antriebsseitigen, inneren Bereich und dem äußeren Bereich des Wischblatts unterschiedliche Reibverhältnisse vorliegen sowie wegen der Stick-Slipeffekte, wird das Wischblatt zum Schwingen angeregt. Dies führt insbesondere am Innenkreis des Wischblatts, wo besonders kleine Reibgeschwindigkeiten vorherrschen, zu unerwünschten seitlichen Bewegungen, die ab einer bestimmten Größe dazu führen können, dass das Wischblatt am Wischarm anschlägt und Klappergeräusche verursacht. Dies ist besonders kritisch, wenn die Fahrzeugscheiben trocken, verschmutzt, vereist oder nicht ausreichend feucht sind oder Schnee auf der Fahrzeugscheibe liegt. Da das Wischblatt dabei den Kontakt zur Fahrzeugscheibe kurzfristig verlieren kann, ist außerdem das Wischbild unbefriedigend. Das Wischblatt neigt umso eher zum Rattern, je mehr Bügelteile es aufweist. Ferner verhalten sich leichte Wischblätter mit einer geringen Federsteifigkeit ungünstiger als andere.

Aus der DE 197 31 683 A1 ist ferner eine Einrichtung zum Führen des Wischblatts bekannt, die ein erstes und ein zweites Teil aufweist. Sie ist im Bereich der Anlenkstelle des Krallenbügels angeordnet und mit dem Gelenkteil des Wischarms fest verbunden, z.B. durch Kleben, Schweißen, Löten, Klipsen, Klemmen usw. Das erste Teil der Einrichtung besitzt Führungswangen, welche die Gelenkstelle des Krallenbügels umgreifen und in Bezug auf den Wischarm führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Einrichtung verbunden, z.B. durch ein nachgiebiges Element.

Das zweite Teil kann auch aus einer Federzunge bestehen, die das erste Teil mit der Einrichtung in der Weise verbindet, dass das erste Teil in Bewegungsrichtung des Scheibenwischers starr geführt ist, während es senkrecht zur Fahrzeugscheibe gegenüber dem Wischarm nachgeben kann. Es ist natürlich auch möglich, als zweites Teil eine Kombination zwischen einer Federzunge und Führungswangen zu wählen, wobei die Federzunge dann die Funktion des nachgiebigen Elements übernimmt. Ferner kann die Einrichtung aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen. Zwischen den Führungsflächen der Einrichtung werden in der Regel Luftspalte vorgesehen, um zu verhindern, dass das Gelenk zwischen Wischblatt und Wischarm durch toleranzbehaftete Wischarmgeometrien, z.B. Kröpfungen der Wischstange, nicht klemmt. Auch hierbei können Klappergeräusche entstehen, weil das seitliche Schwingen zwar stark vermindert, aber nicht vollständig vermieden wird.

Aus der DE-A1-44 36 604 ist ein Wischarm mit einem gelenkig verbundenen Wischblatt nach dem Oberbegriff von Anspruch 1 bekannt, wobei der Wischarm und das Wischblatt in Wischrichtung nebeneinander angeordnet sind. Zwischen dem Wischarm und im Bereich eines Endabschnitts des Wischblatts ist eine Führungseinrichtung mit einem Führungselement angeordnet, das eine blattähnliche Form besitzt. Seine Länge ist deutlich größer als die Breite sowie die Dicke, die wiederum um ein Vielfaches geringer ist als die Breite. Die beiden Befestigungsabschnitte, mit denen das Führungselement mit dem Wischarm bzw. dem Wischblatt verbunden ist, sind über Filmscharniere unmittelbar an das Führungselement angebunden und stehen von diesem rechtwinklig ab. Ein geringfügiger Längenausgleich, der während der Wischbewegung senkrecht zur Wischrichtung zwischen dem Endabschnitt des Wischblatts und dem Wischarm erforderlich ist, wird über das Spiel an den Anbindungsstellen zwischen Wischarm und Wischblatt ermöglicht. Um größere Längenänderungen auszugleichen oder für eine nahezu spielfreie Anbindung der Führungseinrichtung ist das Führungselement in zwei Abschnitte unterteilt, die über ein Gelenk miteinander verbunden sind, wobei das Gelenk eine Abwinkelung um eine etwa parallel zur Wischrichtung verlaufenden Achse ermöglicht.

### Vorteile der Erfindung

Nach der Erfindung ist das Lenkerblatt federnd und weist einen in Längsrichtung des Wischblaltts nachgiebigen Bereich auf. Durch die Fixierung des Lenkerblatts an beiden Enden, und zwar zum einen am Wischarm, insbesondere an dessen Gelenkteil, und zum anderen am Wischblatt, ergibt sich eine spielfreie Führung zwischen dem Wischarm und dem Wischblatt, die besonders für flach bauende Scheibenwischer geeignet ist. Dabei kann der Wischarm oberhalb des Wischblatts oder seitlich versetzt dazu verlaufen.

Der in Längsrichtung nachgiebige Bereich des Lenkerblatts bewirkt, dass bei Relativbewegungen zwischen dem Wischarm und dem Wischblatt das Lenkerblatt in Längsrichtung nachgeben kann und somit für den relativen Hub zwischen dem Wischarm und dem Wischblatt einen notwendigen Längenausgleich schafft. In der Regel ist das Lenkerblatt in einer Bewegungsrichtung senkrecht zur Windschutzscheibe sehr weich ausgelegt, so dass es die Auflagekräfte des Wischblatts nicht nennenswert verändert. Parallel zur Windschutzscheibe ist das Lenkerblatt ausreichend steif ausgebildet, wodurch sich eine gute seitliche Führung des Wischblatts ergibt.

Um das Wischblatt einfach montieren und demontieren zu können, ist es zweckmäßig, dass das Lenkerblatt zumindest an einem Ende lösbar am Wischarm oder am Wischblatt fixiert ist. Das andere Ende kann fest mit dem jeweiligen Bauteil verbunden sein. So kann z.B. das Lenkerblatt an einem Ende in ein u-förmiges Profil des Gelenkteils des Wischarms eingeschweißt, eingelötet oder eingeklebt sein, während das andere Ende über zwei ineinander greifende Koppelteile mit dem Wischblatt, insbesondere dem Wischleistenträger verbunden ist. Dabei ist es vorteilhaft, dass das Lenkerblatt im montiertem Zustand in Längsrichtung eine geringe Vorspannung aufweist.

Das Lenkerblatt kann auch fest mit dem Wischblatt verbunden sein, indem es z.B. an einer Kunststoffkappe des Wischleistenträgers angeformt oder mit einem Ende in der Kappe durch Spritzgießen eingegossen ist. Auch andere feste Verbindungen mit der Kappe oder einem Teil des Wischleistenträgers sind möglich. In diesem Fall ist am anderen Ende des Lenkerblatts ein Koppelelement vorgesehen, das in das u-förmige Querschnittprofil des Gelenkteils mit einem ausreichenden Presssitz fixiert ist oder mit einem weiteren, am Wischarm befestigten Koppelteil zusammenwirkt. Die Koppelteile auf der Seite des Wischarms oder auf der Seite des Wischblatts können so gestaltet werden, dass sie ein Kugelgelenk bilden.

Dadurch können zwangsfrei Winkelabweichungen ausgeglichen werden. Die Enden des Lenkerblatts können auch mittels eines Klippstücks am Wischarm bzw. Wischblatt fixiert werden, wobei das Klippstück mit Rastelementen z.B. in Form von Nasen oder entsprechender Vorsprünge in Ausnehmungen oder Vertiefungen der Bauteile eingreift.

Das Lenkerblatt selbst muss eine geeignete Elastizität aufweisen. Es kann aus einem geeigneten Kunststoff, vorzugsweise einem durch Faser verstärkten Kunststoff, oder zweckmäßigerweise aus Federstahl gefertigt sein. Der in Längsrichtung nachgiebige Bereich wird in vorteilhafter Weise durch einen gewellten Bereich des Lenkerblatts gebildet, wobei die Breite des Lenkerblatts im gewellten Bereich etwa parallel und/oder senkrecht zur Windschutzscheibe verläuft. In allen Fällen findet bei einer Relativbewegung zwischen dem Wischarm und dem Wischblatt ein Längenausgleich in Längsrichtung statt. Bei einer Ausrichtung der Breite des Lenkerblatts parallel zur Windschutzscheibe wird eine größere Nachgiebigkeit in senkrechter Richtung erreicht, während bei einer Ausrichtung senkrecht zur Windschutzscheibe zum Ausgleich von Fertigungstoleranzen eine Nachgiebigkeit parallel zur Windschutzscheibe erreicht werden kann. Beide Möglichkeiten können kombiniert werden, indem das Lenkerblatt entsprechend um seine Längsachse geschränkt wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht eines Wischarms mit einem gelenkig verbunden Wischblatt,
- Fig. 2: ein Detail einer Einrichtung entsprechend der Linie II in Fig. 1,
- Fig. 3 bis 11: Varianten zu Fig. 2,
- Fig. 12: eine perspektivische Teilansicht eines Gelenkteils mit einem Wischblatt von unten und
- Fig. 13 bis 17: weitere Varianten zu Fig. 2.

### Beschreibung der Ausführungsbeispiele

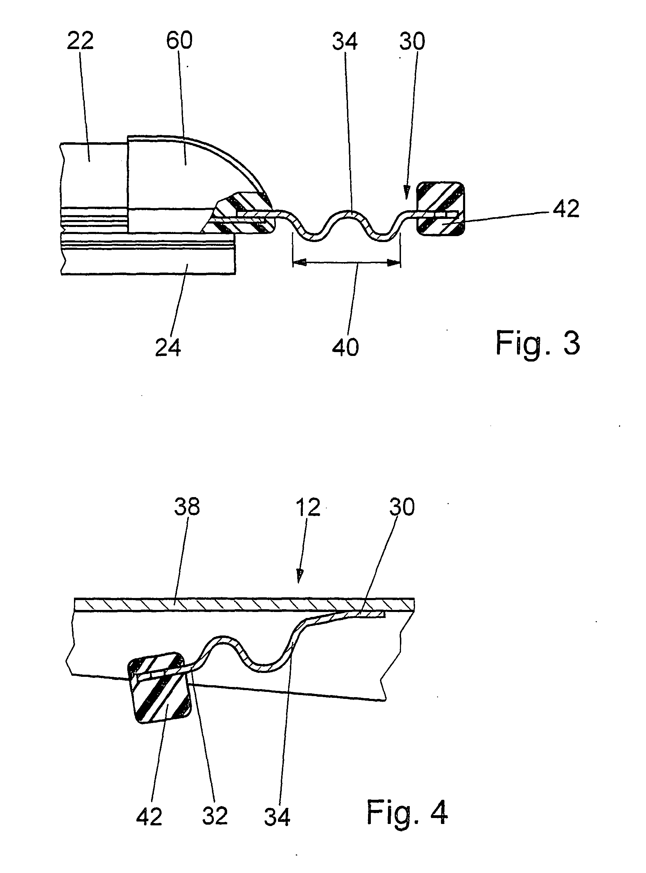

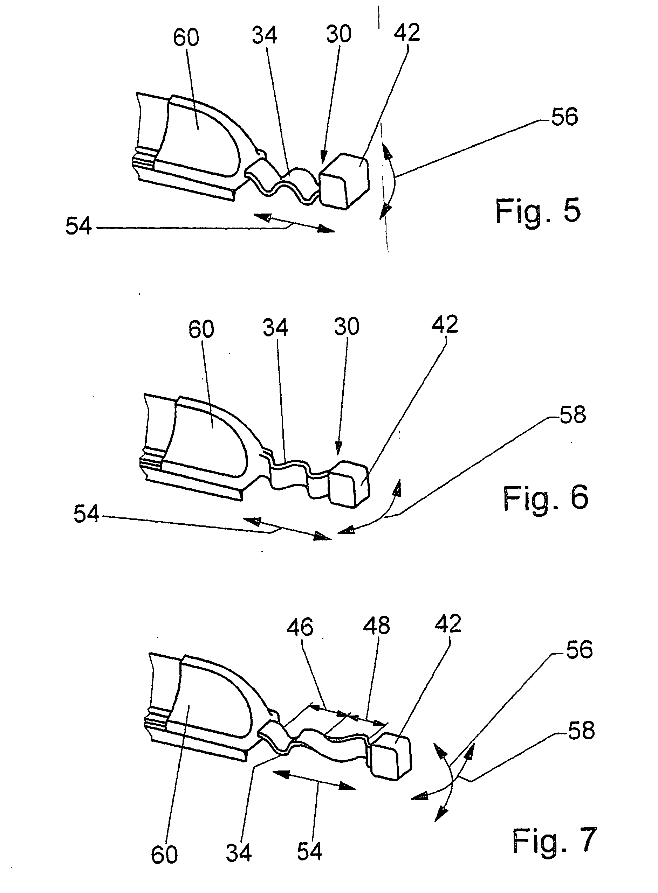

Mit einem Wischarm 10, der ein Gelenkteil 12 und eine Wischstange 14 besitzt, ist ein Wischblatt 20 gelenkig verbunden, indem ein hakenförmiges Ende 16 der Wischstange 14 einen Gelenkbolzen 18 des Wischblatts 20 umgreift. Das Wischblatt 20 besitzt einen Wischleistenträger 22, an dem der Gelenkbolzen 18 angeordnet ist und an dem eine Wischleiste 24 befestigt ist. Zwischen dem Wischblatt 20 und dem Gelenkteil 12 des Wischarms 10 ist eine Einrichtung 28 mit einem Lenkerblatt 34 vorgesehen, dessen erstes Ende 30 am Gelenkteil 12 und dessen zweites Ende 32 am Wischerblatt 20, insbesondere am Wischleistenträger 22 fixiert ist. Das Lenkerblatt 34 hat einen in Längsrichtung 54 (Fig. 5) nachgiebigen Bereich, in dem es zumindest teilweise in Längsrichtung gewellt ist. Der gewellte Bereich ist in Fig. 3 mit 40 bezeichnet.

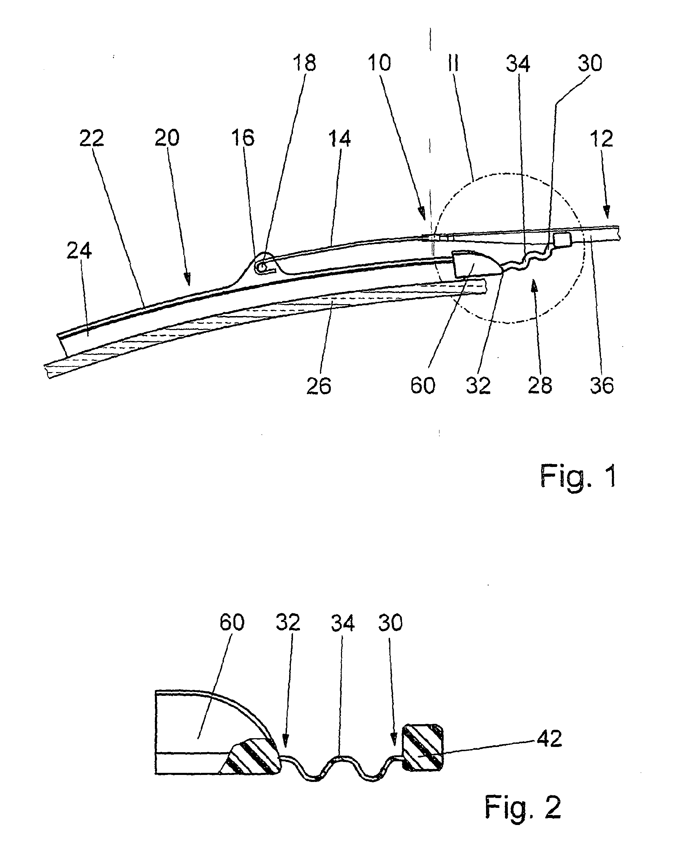

Das Ausführungsbeispiel nach Fig. 2 zeigt ein Lenkerblatt 34 aus Kunststoff, das an seinem ersten Ende 30 ein angeformtes, quaderförmiges Koppelelement 42 besitzt, das zwischen Seitenwangen 36 in ein u-förmiges Profil des Gelenkteils 12 geklemmt werden kann. Das zweite Ende 32 des Lenkerblatts 34 nach Fig. 2 ist an einer Kappe 60 aus Kunststoff angeformt, die am Wischblatt 20 befestigt ist, nämlich am Ende des Wischleistenträgers 22 und der Wischleiste 24. Es ist auch möglich, dass eine Kappe aus Kunststoff bei einem Tragbügelsystem im Bereich eines Bügelgelenks angeordnet ist.

Die Ausführung nach Fig. 3 unterscheidet sich von der Ausführung nach Fig. 2 dadurch, dass das Lenkerblatt 34 aus einem Federstahl gefertigt ist, und seine Enden 30, 32 in dem Koppelelement 42 bzw. in der Kappe 60 aus Kunststoff eingegossen sind. Bei der Ausführung nach Fig. 4 ist das Lenkerblatt 34 mit seinem ersten Ende 30 unmittelbar an einer Deckwand 38 des Gelenkteils 12 befestigt, z.B. durch Schweißen, Löten, Kleben usw. Die Befestigungsart richtet sich nach dem Werkstoff, aus dem das Lenkerblatt 34 und das Gelenkteil 12 bestehen. Bei der dargestellten Ausführung ist das Lenkerblatt aus Federstahl und ist mit dem Gelenkteil 12 aus Blech verschweißt. Das zweite Ende 32 des Lenkerblatts 34 ist in einem Koppelelement 42 vergossen.

Bei der Ausführung nach Fig. 5 ist das Lenkerblatt 34 in Längsrichtung 54 gewellt, wobei die Breite des Lenkerblatts 34 etwa parallel zur Windschutzscheibe 26 verläuft. Dabei ergibt sich ein guter Höhenausgleich in Richtung 56 und ein Längenausgleich in Längsrichtung 54.

Bei der Ausführung nach Fig. 6 ist die Breite des Federblatts 34 etwa senkrecht zur Windschutzscheibe 26 ausgerichtet, so dass sich neben dem Längenausgleich in Längsrichtung 54 ein Seitenausgleich in Richtung 58 ergibt.

Bei der Ausführung nach Fig. 7 ist das Lenkerblatt 34 im gewellten Bereich 40 geschränkt, so dass sich ein erster Bereich 46 ergibt, in dem die Breite des Lenkerblatts 34 etwa parallel zur Windschutzscheibe 26 verläuft, während in einem zweiten Bereich 48 die Breite des Lenkers 34 etwa senkrecht zur Windschutzscheibe 26 verläuft. Dadurch ergibt sich ein Ausgleich in Längsrichtung 54 und in der Richtung 56 senkrecht zur Windschutzscheibe 26 und in einer Richtung 58 senkrecht zur Längsrichtung 54 und parallel zur Windschutzscheibe 26.

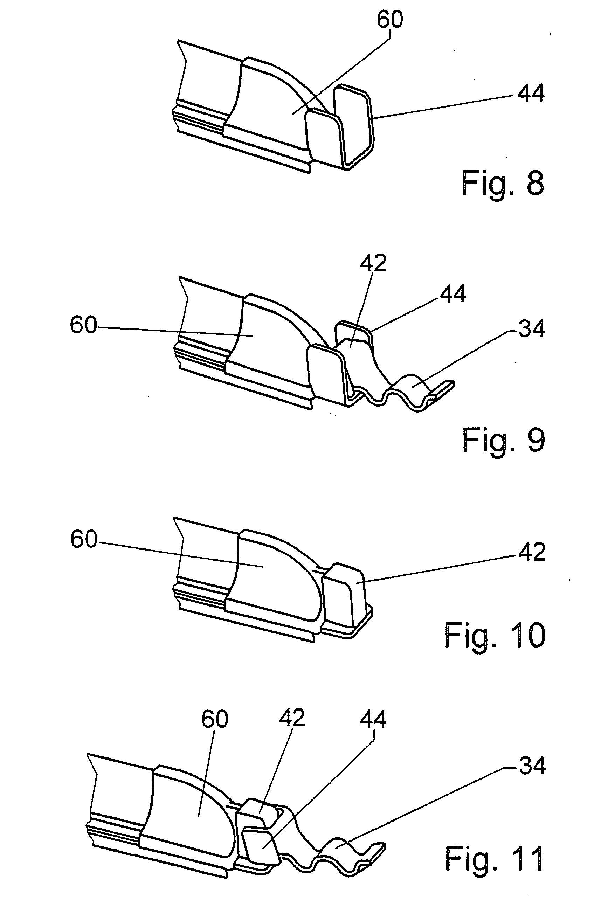

Die Ausführungen nach Fig. 8 bis Fig. 11 zeigen Varianten, bei denen das Lenkerblatt 34 über Koppelelemente 42 und 44 mit der Kappe 60 verbunden ist. Das Koppelelement 44 hat eine schuhförmige Gestalt, in die das Koppelelement 42 in Form eines Quaders eingepasst ist. Fig. 8 und Fig. 9 zeigen eine Ausführung, bei der das schuhförmige Koppelelement 44 an der Kappe 60 angeformt ist, während das quaderförmige Koppelelement 42 an dem Lenkerblatt 34 vorgesehen ist. Fig. 10 und Fig. 11 zeigen die Alternative, bei der das quaderförmige Koppelelement 42 mit der Kappe 60 verbunden ist, während das schuhförmige Koppelelement 44 am Ende des Lenkerblatts 34 angeformt ist und das Koppelelement 42 umgreift.

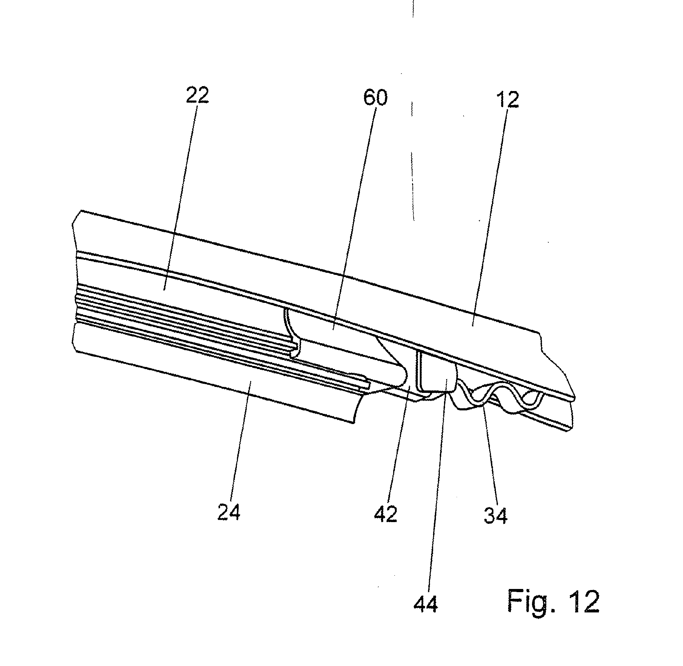

Fig. 12 zeigt eine Ausführung nach Fig. 10 und 11 zusammen mit einem Gelenkteil 12 in einer perspektivischen Teilansicht von unten.

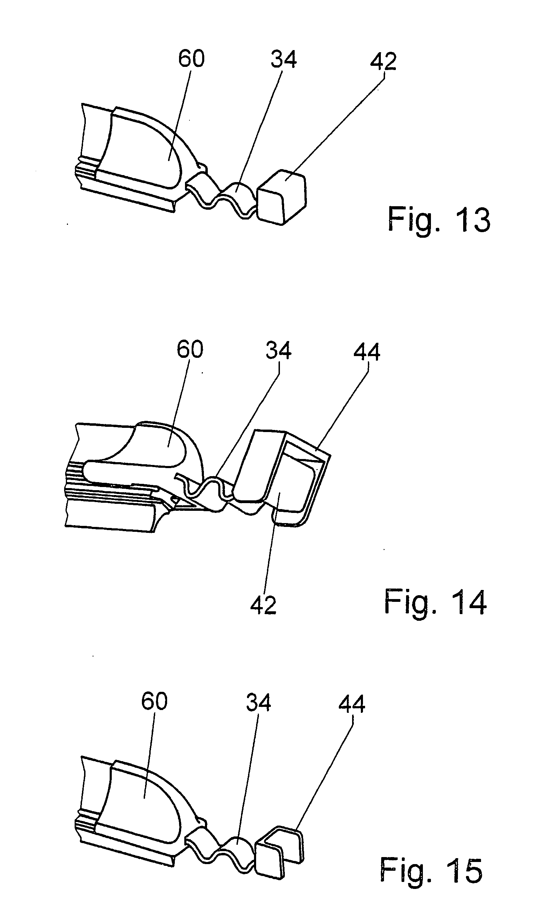

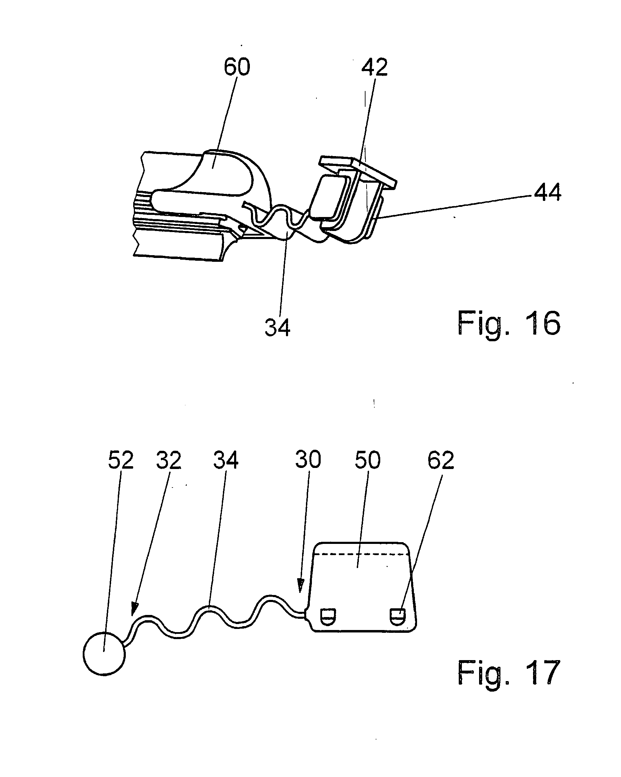

Die Ausführungen nach Fig. 13 bis 15 zeigen ein Lenkerblatt 34, das mit seinem zweiten Ende 32 fest mit der Kappe 60 verbunden ist und über Koppelelemente 42 und 44 am ersten Ende 30 mit dem Gelenkteil 12 verbunden ist. Bei der Ausführung nach Fig. 13 kann das quaderförmige Koppelelement 42 unmittelbar in ein u-förmiges Querschnittprofil des Gelenkteils 12 geklemmt werden oder, wie Fig. 14 zeigt, in ein schuhförmiges Koppelelement 44, das mit dem Gelenkteil 12 fest verbunden ist. Bei der Ausführung nach Fig. 15 ist ein schuhförmiges Koppelelement 44 am ersten Ende 30 des Lenkerblatts 34 vorgesehen. Dieses kann ebenfalls in das u-förmige Profil des Gelenkteils 12 geklemmt werden oder ein am Wischarm 10 befestigtes quaderförmiges Koppelelement 42 umgreifen (Fig. 16).

Bei der Ausführung nach Fig. 17 besitzt das Lenkerblatt 34 an seinem ersten Ende 30 ein Klippstück 50, das in das u-förmige Profil des Gelenkteils 12 gedrückt werden kann und mit Nasen 62 oder anderen geeigneten Vorsprüngen in entsprechende Vertiefungen oder Ausnehmungen des Gelenkteils 12 einrastet. Am zweiten Ende 32 besitzt das Lenkerblatt 34 ein Koppelelement 52 in Kugelform, das mit einem entsprechenden nicht näher dargestellten Gegenstück als Koppelelement ein Kugelgelenk bildet, wodurch Winkelabweichungen ausgeglichen werden können.

### Bezugszeichen

- 10: Wischarm
- 12: Gelenkteil
- 14: Wischstange
- 16: hakenförmiges Ende
- 18: Gelenkbolzen
- 20: Wischblatt
- 22: Wischleistenträger
- 24: Wischleiste
- 26: Windschutzscheibe
- 28: Einrichtung
- 30: erstes Ende
- 32: zweites Ende
- 34: Lenkerblatt
- 36: Seitenwange
- 38: Abschlußwand
- 40: gewellter Bereich
- 42: Koppelelement
- 44: Koppelelement
- 46: erster Bereich
- 48: zweiter Bereich
- 50: Klippstück
- 52: Koppelelement
- 54: Längsrichtung
- 56: Richtung
- 58: Richtung
- 60: Kappe
- 62: Nase

## Patentansprüche

1. Wischarm (10) mit einem gelenkig verbundenen Wischblatt (20), das einen Wischleistenträger (22) und eine Wischleiste (24) umfasst und durch eine Einrichtung (28) mit einem Lenkerblatt (34) gegenüber dem Wischarm (10) seitlich geführt ist, wobei ein erstes Ende (30) des Lenkerblatts (34) an einem Gelenkteil (12) des Wischarms (10) und ein zweites Ende (32) des Lenkerblatts (34) am Wischblatt (20) fixiert sind, **dadurch gekennzeichnet, dass** das Lenkerblatt (34) federnd ist und einen in Längsrichtung (54) des Wischblatts (20) nachgiebigen Bereich (40, 46, 48) aufweist.

2. Wischarm (10) mit einem gelenkig verbundenen Wischblatt (20) nach Anspruch 1, **dadurch gekennzeichnet, dass** das Lenkerblatt (34) im montierten Zustand eine Vorspannung in Längsrichtung (54) aufweist.

3. Wischarm (10) mit einem gelenkig verbundenen Wischblatt (20) nach einem der vorhergehenden Ansprüche, **dadurch gekennzeichnet, dass** das Lenkerblatt (34) aus Federstahl gefertigt ist.

4. Wischarm (10) mit einem gelenkig verbundenen Wischblatt (20) nach einem der vorhergehenden Ansprüche, **dadurch gekennzeichnet, dass** das erste Ende (30) lösbar am Wischarm (10) fixiert ist.

5. Wischarm (10) mit einem gelenkig verbundenen Wischblatt (20) nach Anspruch 4, **dadurch gekennzeichnet, dass** das erste Ende (30) des Lenkerblatts (34) ein Koppelelement (42, 44) trägt, das zwischen Seitenwangen (36) des Gelenkteils (12) geklemmt ist.

6. Wischarm (10) mit einem gelenkig verbundenen Wischblatt (20) nach Anspruch 4, **dadurch gekennzeichnet, dass** am ersten Ende (30) des Lenkerblatts (34) ein Koppelelement (42, 44, 52) befestigt oder angeformt ist, das mit einem entsprechenden Koppelelement (42, 44) zusammenwirkt, das mit dem Gelenkteil (12) verbunden ist.

7. Wischarm (10) mit einem gelenkig verbundenen Wischblatt (20) nach einem der Ansprüche 4 bis 6, **dadurch gekennzeichnet, dass** entsprechende Koppelelemente (52) ein Kugelgelenk bilden.

8. Wischarm (10) mit einem gelenkig verbundenen Wischblatt (20) nach einem der vorhergehenden Ansprüche, **dadurch gekennzeichnet, dass** am ersten Ende (30) des Lenkerblatts (34) ein Klippstück (50) befestigt ist, das mit Nasen (62) in entsprechende Öffnungen bzw. Vertiefungen des Gelenkteils (12) eingerastet werden kann.

9. Wischblatt (20), das einen Wischleistenträger (22) und eine Wischleiste (24) umfasst und mit einem Lenkerblatt (34), das das Wischblatt (20) gegenüber einem Wischarm (10) seitlich führt, wobei ein erstes Ende (30) des federnden Lenkerblatts (34) an einem Gelenkteil (12) des Wischarms (10) fixierbar ist und ein zweites Ende (32) des Lenkerblatts (34) am Wischblatt (20) fixiert ist sowie einen in Längsrichtung des Wischblatts (20) (54) nachgiebigen Bereich (40, 46, 48) aufweist, für einen Wischarm (10) mit einem gelenkig verbundenen Wischblatt (20) nach einem der vorhergehenden Ansprüche, wobei das zweite Ende (32) des Lenkerblatts (34) an einer Kappe (60) aus Kunststoff am Ende des Wischleistenträgers (22) oder der Wischleiste (24) angeformt oder eingegossen ist.

10. Wischblatt (20) mit einem Lenkerblatt (34) nach dem Oberbegriff von Anspruch 9 für einen Wischarm (10) mit einem gelenkig verbundenen Wischblatt (20) nach einem der Ansprüche 1 bis 8, wobei am zweiten Ende (32) des Lenkerblatts (34) ein Koppelelement (42, 44, 52) befestigt oder angeformt ist, das mit einem entsprechenden Koppelelement (42, 44) zusammenwirkt, das mit dem Wischblatt (20) verbunden ist.

11. Wischblatt (20) mit einem Lenkerblatt (34) für einen Wischarm (10) mit einem gelenkig verbundenen Wischblatt (20) nach Anspruch 10, **dadurch gekennzeichnet, dass** entsprechende Koppelelemente (52) ein Kugelgelenk bilden.

12. Wischblatt (20) mit einem Lenkerblatt (34) für einen Wischarm (10) mit einem gelenkig verbundenen Wischblatt (20) nach einem der Ansprüche 9 bis 11, **dadurch gekennzeichnet, dass** das Lenkerblatt (34) mindestens einen quer zur Längsrichtung (54) gewellten Bereich (40, 46, 48) hat.

13. Wischblatt (20) mit einem Lenkerblatt (34) für einen Wischarm (10) mit einem gelenkig verbundenen Wischblatt (20) nach Anspruch 12, **dadurch gekennzeichnet, dass** die Breite des Lenkerblatts (34) im gewellten Bereich (40, 46, 48) etwa parallel und/oder senkrecht zur Windschutzscheibe (26) verläuft.

## Claims

1. Wiper arm (10) comprising a wiper blade (20) which is connected to the same in an articulated manner and comprises a wiper strip carrier (22) and a wiper strip (24), and is laterally guided in relation to the wiper arm (10) by a system (28) comprising a blade guide (34), a first end (30) of the blade guide (34) being fixed to an articulated part (12) of the wiper arm (10) and a second end (32) of the blade guide (34) being fixed to the wiper blade (20), **characterized in that** the blade guide (34) is resilient and has a region (40, 46, 48) which is flexible in the longitudinal direction (54) of the wiper blade (20).

2. Wiper arm (10) comprising a wiper blade (20) which is connected to the same in an articulated manner, according to Claim 1, **characterized in that** the blade guide (34), when fitted, has a pre-stress in the longitudinal direction (54).

3. Wiper arm (10) comprising a wiper blade (20) which is connected to the same in an articulated manner, according to one of the preceding claims, **characterized in that** the blade guide (34) is manufactured from spring steel.

4. Wiper arm (10) comprising a wiper blade (20) which is connected to the same in an articulated manner, according to one of the preceding claims, **characterized in that** the first end (30) is fixed releaseably to the wiper arm (10).

5. Wiper arm (10) comprising a wiper blade (20) which is connected to the same in an articulated manner, according to Claim 4, **characterized in that** the first end (30) of the blade guide (34) bears a coupling element (42, 44) which is clamped between side cheeks (36) of the articulated part (12).

6. Wiper arm (10) comprising a wiper blade (20) which is connected to the same in an articulated manner, according to Claim 4, **characterized in that** a coupling element (42, 44, 52) is fastened to or integrally formed on the first end (30) of the blade guide (34) and interacts with a corresponding coupling element (42, 44) which is connected to the articulated part (12).

7. Wiper arm (10) comprising a wiper blade (20) which is connected to the same in an articulated manner, according to one of Claims 4 to 6, **characterized in that** corresponding coupling elements (52) form a ball-and-socket joint.

8. Wiper arm (10) comprising a wiper blade (20) which is connected to the same in an articulated manner, according to one of the preceding claims, **characterized in that** a clip piece (50) is fastened to the first end (30) of the blade guide (34) and can be latched by means of lugs (62) into corresponding openings or depressions of the articulated part (12).

9. Wiper blade (20) which comprises a wiper strip carrier (22) and a wiper strip (24) and has a blade guide (34) which laterally guides the wiper blade (20) in relation to a wiper arm (10), a first end (30) of the resilient blade guide (34) being fixable to an articulated part (12) of the wiper arm (10) and a second end (32) of the blade guide (34) being fixed to the wiper blade (20) and also having a region (40, 46, 48), which is flexible in the longitudinal direction (54) of the wiper blade (20), for a wiper arm (10) comprising a wiper blade (20) which is connected to the same in an articulated manner, according to one of the preceding claims, the second end (32) of the guide blade (34) being integrally formed on or cast into a plastic cap (60) at the end of the wiper strip carrier (22) or the wiper strip (24).

10. Wiper blade (20) having a blade guide (34), according to the precharacterizing clause of Claim 9, for a wiper arm (10) comprising a wiper blade (20) which is connected to the same in an articulated manner, according to one of Claims 1 to 8, a coupling element (42, 44, 52) being fastened to or integrally formed on the second end (32) of the blade guide (34) and interacting with a corresponding coupling element (42, 44) which is connected to the wiper blade (20).

11. Wiper blade (20) having a blade guide (34) for a wiper arm (10) comprising a wiper blade (20) which is connected to the same in an articulated manner, according to Claim 10, **characterized in that** corresponding coupling elements (52) form a ball-and-socket joint.

12. Wiper blade (20) having a blade guide (34) for a wiper arm (10) comprising a wiper blade (20) which is connected to the same in an articulated manner, according to one of Claims 9 to 11, **characterized in that** the blade guide (34) has at least one region (40, 46, 48) which is wavy transversely with respect to the longitudinal direction (54).

13. Wiper blade (20) having a blade guide (34) for a wiper arm (10) comprising a wiper blade (20) which is connected to the same in an articulated manner, according to Claim 12, **characterized in that** the width of the blade guide (34) in the wavy region (40, 46, 48) runs approximately parallel and/or perpendicular to the windscreen (26).

## Revendications

1. Bras d'essuie-glace (10) ayant au moins un balai d'essuie-glace (20) relié de manière articulée, ce balai se composant d'un support (22) pour lame d'essuyage ainsi que d'une lame d'essuyage (24) et une installation (28) avec une lame de guidage (34) pour être guidée latéralement par rapport au bras d'essuie-glace (10),
une première extrémité (30) de la lame de guidage (34) étant fixée à une pièce d'articulation (12) du bras d'essuie-glace (10) et une seconde extrémité (32) de la lame de guidage (34) étant fixée au balai d'essuie-glace (20),
**caractérisé en ce que**
la lame de guidage (34) est élastique et présente une zone souple (40, 46, 48) dans la direction longitudinale du balai d'essuie-glace (20).

2. Bras d'essuie-glace (10) ayant au moins un balai d'essuie-glace (20) relié de manière articulée selon la revendication 1,
**caractérisé en ce que**
la lame de guidage (34) est précontrainte dans la direction longitudinale (54) à l'état monté.

3. Bras d'essuie-glace (10) ayant au moins un balai d'essuie-glace (20) relié de manière articulée selon l'une quelconque des revendications précédentes,
**caractérisé en ce que**
la lame de guidage (34) est en acier à ressort.

4. Bras d'essuie-glace (10) ayant au moins un balai d'essuie-glace (20) relié de manière articulée selon l'une quelconque des revendications précédentes,
**caractérisé en ce que**
la première extrémité (30) est fixée de manière amovible au bras d'essuie-glace (10).

5. Bras d'essuie-glace (10) ayant au moins un balai d'essuie-glace (20) selon la revendication 4,
**caractérisé en ce que**
la première extrémité (30) de la lame de guidage (34) porte un élément de couplage (42, 44) serré entre les parois latérales (36) de la pièce d'articulation (12).

6. Bras d'essuie-glace (10) ayant au moins un balai d'essuie-glace (20) selon la revendication 4,
**caractérisé en ce que**
la première extrémité (30) de la lame de guidage (34) comporte un élément de couplage (42, 44, 52), fixé ou formé, qui coopère avec un élément de couplage correspondant (42, 44) relié à la pièce d'articulation (12).

7. Bras d'essuie-glace (10) ayant au moins un balai d'essuie-glace (20) selon l'une des revendications 4 à 6,
**caractérisé en ce que**
des éléments de couplage qui se correspondent (52) forment une articulation à rotule.

8. Bras d'essuie-glace (10) ayant au moins un balai d'essuie-glace (20) selon l'une des revendications précédentes,
**caractérisé en ce que**
la première extrémité (30) de la lame de guidage (34) porte une pièce d'enclipsage (50) qui peut être accrochée par des becs (62) dans des ouvertures ou des cavités correspondantes de la pièce d'articulation (12).

9. Balai d'essuie-glace (20) comprenant un support de lame d'essuyage (22) et une lame d'essuyage (24) ainsi qu'une lame de guidage (34) guidant le balai d'essuie-glace (20) latéralement par rapport au bras d'essuie-glace (10), une première extrémité (30) de la lame de guidage élastique (34) pouvant être fixée à une pièce d'articulation (12) du bras d'essuie-glace (10), une seconde extrémité (32) de la lame de guidage (34) étant fixée au balai d'essuie-glace (20) ainsi qu'une zone (40, 46, 48) souple dans la direction longitudinale du balai d'essuie-glace (20, 54) pour un bras d'essuie-glace (10) auquel est relié un balai d'essuie-glace (20) par une liaison articulée selon l'une des revendications précédentes, dans lequel la seconde extrémité (32) de la lame de guidage (34) est formée ou intégrée par injection dans un capuchon (60) en matière plastique à l'extrémité du support de lame d'essuyage (22) ou de la lame d'essuyage (24).

10. Balai d'essuie-glace (20) comportant une lame de guidage (34) selon le préambule de la revendication 9 pour un bras d'essuie-glace (10) ayant un balai d'essuie-glace (20) relié de manière articulée selon l'une des revendications 1 à 8 dont la seconde extrémité (32) de la lame de guidage (34) comporte un élément de couplage (42, 44, 52) fixé ou formé, et coopérant avec un élément de couplage correspondant (42, 44) relié au balai d'essuie-glace (20).

11. Balai d'essuie-glace (20) comportant un lame de guidage (34) pour un bras d'essuie-glace (10) auquel est relié le balai d'essuie-glace (20) de manière articulée selon la revendication 10,
**caractérisé en ce que**
des éléments de couplage qui se correspondent (52) forment une articulation à rotule.

12. Balai d'essuie-glace (20) comportant une lame de guidage (34) pour un bras d'essuie-glace (10) auquel est relié un balai d'essuie-glace (20) par une liaison articulée selon l'une des revendications 9 à 11,
**caractérisé en ce que**
la lame de guidage (34) a une zone ondulée (40, 46, 48) au moins transversalement à la direction longitudinale (54).

13. Balai d'essuie-glace (20) comportant une lame de guidage (34) pour un bras d'essuie-glace (10) auquel est relié un balai d'essuie-glace (20) par une liaison articulée selon la revendication 12,
**caractérisé en ce que**
la largeur de la lame de guidage (34) dans la zone ondulée (40, 46, 48) est sensiblement parallèle et/ou perpendiculaire au pare-brise (26).
